# EUROPÄISCHE PATENTSCHRIFT

(11) **EP 0 431 155 B1**
(45) Veröffentlichungstag und Bekanntmachung des Hinweises auf die Patenterteilung: **18.01.1995**
(21) Anmeldenummer: 90917809.7
(22) Anmeldetag: 26.06.1990
(51) Int. Cl.: G09F 11/26, G11B 7/00

(54) **VORRICHTUNG ZUM AUFBRINGEN VON INFORMATIONEN AUF EINEN OPTISCHEN AUFZEICHNUNGSTRÄGER**
DEVICE FOR RECORDING INFORMATION ON AN OPTICAL RECORD CARRIER
DISPOSITIF POUR PORTER DES INFORMATIONS SUR UN SUPPORT OPTIQUE D'ENREGISTREMENT

(30) Priorität: 30.06.1989 DE 3921470
(43) Veröffentlichungstag der Anmeldung: 12.06.1991
(73) Patentinhaber: Moses, Klaus M., D-65812 Bad Soden (DE)
(72) Erfinder: Moses, Klaus M., D-65812 Bad Soden (DE)
(86) Internationale Anmeldenummer: DE9000482
(87) Internationale Veröffentlichungsnummer: WO9100595

(56) Entgegenhaltungen:
- PATENTS ABSTRACTS OF JAPAN vol.12, no. 360 (M-746) 27 September 1988,& JP-A-63 115696 (CANON INC.) 20 May 1988
- PATENTS ABSTRACTS OF JAPAN vol. 12, no. 257 (M-719) (3104) 20 July 1988, & JP-A-63 041191 (RICOH CO., LTD) 22 February 1988
- PATENTS ABSTRACTS OF JAPAN vol. 13, no. 274 (M-841) (3622) 23 Juni 1989, & JP-A-01 072894 (RICOH CO., LTD) 17 March 1989

## Beschreibung

Die Erfindung betrifft eine Vorrichtung zum spalten- und zeilenweisen Aufbringen von Informationen auf einen, eine Schicht, durch mit unterschiedliche Temperaturen beeinflußbaren optischen Eigenschaften, aufweisenden Aufzeichnungsträger, wobei ausgehend von einer ersten Temperatur (beispielsweise Zimmertemperatur) und einem ersten Zustand (z.B. opak) die Schicht durch Erwärmung auf eine zweite Temperatur in einen zweiten (z.B. klar) optischen Zustand veränderbar ist und diese Änderung nach Abkühlen auf die erste Temperatur permanent erhalten bleibt, dabei kann diese Zustandsänderung rückgängig gemacht werden, indem die Schicht, ausgehend von der ersten Temperatur und dem zweiten Zustand, auf eine dritte Temperatur erwärmt und anschließend wieder abgekühlt wird, dabei ist die zweite Temperatur größer als die erste Temperatur und die dritte Temperatur größer als die zweite Temperatur.

Ein derartiger Aufzeichnungsträger ist bereits bekannt. So wird in den europäischen Patentschriften EP-PS 0 000 868 und 0 014 826 ein Körper mit reversiblen fixierten und temperaturveränderlichen Lichtextinktionen beschrieben, welcher als löschbarer Aufzeichnungsträger bestehend aus einem Stoffpaar ausgebildet ist, welches beispielsweise beim Erwärmen vom Zustand maximaler Lichtextinktion aus bis zu einer unter einer Umwandlungstemperatur liegenden Klartemperatur und anschließendem Abkühlen und unter einem unteren Temperaturwert eine kleiner werdende Lichtextinktion mit steigender Erwärmungstemperatur aufweist.

Der Aufzeichnungs- und Löschvorgang läßt sich beliebig wiederholen, wobei die Aufzeichnung mittels fein gebündelter Wärme- oder Lichtstrahlung oder auch durch Kontaktwärme erfolgen kann. Der bekannte Aufzeichnungsträger eignet sich somit zur löschbaren Aufzeichnung von Zahlen, Buchstaben, Bildern, Mustern, usw. Dabei können die Aufzeichnungen sowohl transparent in opaker Umgebung als auch opak in transparenter Umgebung erfolgen. Eine Vorrichtung nach dem Oberbegriff des Anspruchs 1 ist aus JP-A-63 115 796 bekannt. Diese Vorrichtung zeichnet Informationen auf einen Aufzeichnungsträger auf, bei dem die genannten optischen, Zustände von der Abkühlrate abhängen.

Die Aufgabe der Erfindung besteht nun darin, eine entsprechende Vorrichtung für die Aufzeichnung von optischen Informationen auf den erstgenannten Aufzeichnungsträger anzugeben.

Diese Aufgabe wird durch den Gegenstand des Anspruchs 1 gelöst.

Durch die Löschvorrichtung wird sichergestellt, daß der Aufzeichnungsträger, unabhängig von seinem derzeitigen Zustand in einen definierten Zustand überführt wird. Durch die Kühlvorrichtung wird der Aufzeichnungsträger auf Zimmertemperatur abgekühlt. Die Aufgabe der Vorwärmeinrichtung besteht darin, den Schreibvorgang zu beschleunigen, indem der Aufzeichnungsträger bereits auf eine bestimmte Temperatur vor bzw. während des Schreibvorgangs gebracht undgehalten wird. Diese Temperatur darf jedoch nicht in einem Temperaturbereich liegen, in welchem der durch den Löschvorgang eingestellte Zustand verändert wird. Anschließend wird das Einprägen der aufzuzeichnenden Information in den Aufzeichnungsträger durch die Schreibvorrichtung vorgenommen. Als Ergebnis liegt entweder ein nichttransparenter Aufzeichnungsträger vor, bei welchem die aufgezeichnete Information im transparenten Zustand sichtbar ist bzw. ist der Aufzeichnungsträger transparent und die aufgezeichnete Information nichttransparent. Da der Aufzeichnungsträger blattförmig ist, kann die erfindungsgemäße Vorrichtung mit einer Stapelvorrichtung mit Einzelblatteinzug aus einem oder mehreren Magazinen für den Aufzeichnungsträger ausgestattet werden, so daß sich mit Hilfe dieses Aufzeichnungsträgers das "papierlose" Büro verwirklichen läßt, da diejenigen blattförmigen Aufzeichnungsträger mit nicht mehr benötigten Informationen über die Stapelvorrichtung einer neuen Verwendung zugeführt werden können. Ein Vernichten vertraulicher Informationen mittels eines Reißwolfs ist nicht mehr nötig, da diese von der erfindungsgemäßen Vorrichtung gelöscht werden.

Die erfindungsgemäße Vorrichtung eignet sich beispielsweise zum Beschriften von geeigneten Feldern auf Chipkarten, für Anzeigevorrichtungen zum Einsatz als Drucker, Faximile-Gerät, usw., also auch überall bei solchen Geräten, welche zur Aufzeichnung optischer Informationen dienen und die bisher mit normalen Papier gearbeitet haben.

Die Erfindung wird anhand eines Ausführungsbeispiels näher erläutert, welches in der Zeichnung dargestellt ist.

Es zeigt:
- Fig. 1: die graphische Darstellung der beiden Zustände der Schicht in Abhängigkeit von unterschiedlichen Temperaturen,
- Fig. 2: die generelle Anordnung der einzelnen Vorrichtungen,
- Fig. 3: das Blockschaltbild der Steuereinrichtung,
- Fig. 4: das Blockschaltbild für die Bearbeitung der Druckinformation,
- Fig. 5: das Blockschaltbild zur Erzeugung der Schreibdauer
- Fig. 6: ein Zeitdiagramm mit den einzelnen Vorgängen während eines Druckvorgangs
und
- Fig. 7: verschiedene Ausführungen der Schreibvorrichtung

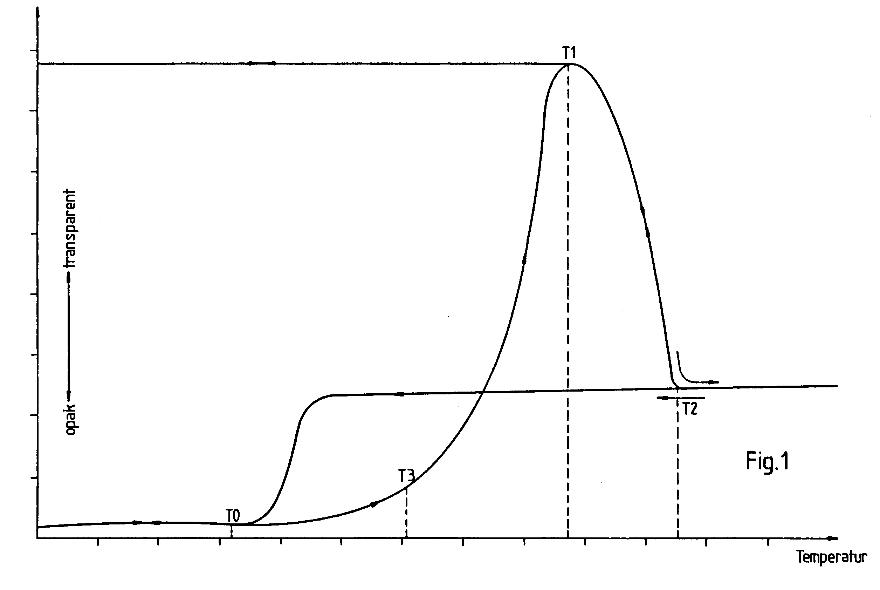

Fig. 1 zeigt für eine mögliche thermosensitive Schicht die Zustandsübergänge als Funktion der Temperatur. Aus dem Diagramm wird deutlich, daß ausgehend von einer ersten Temperatur (Umgebungstemperatur) der nichttransparente Zustand (opak) des Materials bis zur Temperatur T0 und der transparente Zustand bis zur Temperatur T2 erhalten bleibt, wobei T0 bei etwa +35 Grad C und T2 bei etwa +73 Grad C liegt. Ausgehend vom Opak-Zustand und Umgebungstemperatur kann das Material im Bereich der zwischen T0 und T1 kontinuierlich bis zu einem Zustand maximaler Transparenz umgeschaltet werden. Ausgehend vom Transparentzustand und Umgebungstemperatur erfolgt die Umschaltung in den Opak-Zustand schlagartig bei der Temperatur T2. Die Temperatur T1 liegt bei etwa 64 Grad C. Diese Charakteristik ermöglicht auch die Erzeugung von beliebigen Stufen zwischen opak und transparent durch eine entsprechende Dosierung der Schreibenergie.

Zum Schreiben von transparenten Symbolen in opaker Umgebung muß zunächst der Aufzeichnungsträger in den opaken Zustand überführt werden. Dies geschieht durch die Löschvorrichtung gemäß der Erfindung, indem die thermosensitive Schicht zunächst auf mindestens die Temperatur T2 erwärmt und anschließend auf TO oder weniger als T0 abgekühlt wird.

Wird die Schicht anschließend auf eine Temperatur zwischen T1 und T2 erwärmt, welche beispielsweise zwischen +64 und +73 Grad C liegt, so wird die Schicht transparent und behält diesen Zustand auch nach Abkühlung auf die Umgebungstemperatur bei.

Es ist ebenso möglich, den Schreibvorgang umzukehren und die beschriebenen und auch unbeschriebenen Schichten zunächst auf die Temperatur T1 zu erwärmen und diese so in den transparenten zustand zu überführen. Anschließend erfolgt das Aufzeichnen der Information mit der Temperatur T2, wonach anschließend die aufgezeichneten Information in nichttransparenten Form in transparenter Umgebung vorliegt.

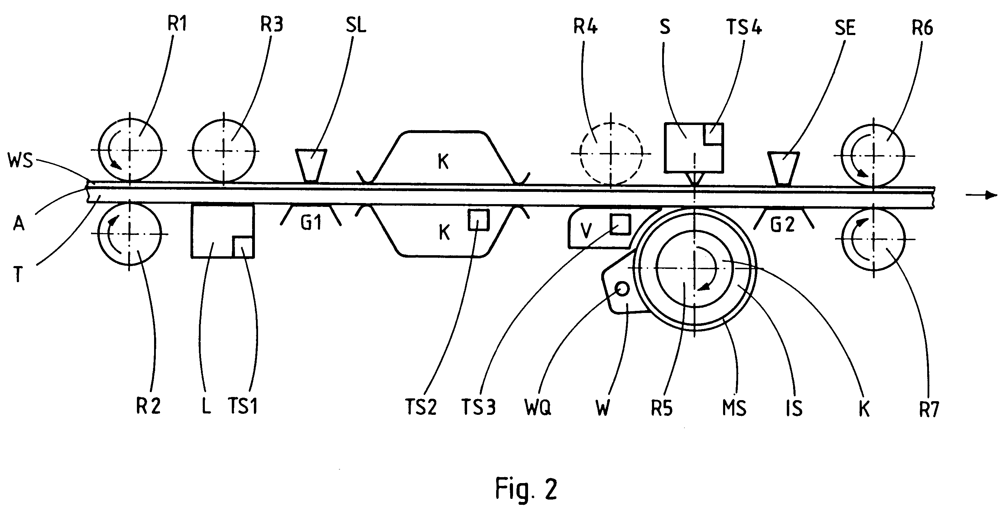

Die gesamte Vorrichtung zum Aufbringen von Informationen auf einen Aufzeichnungsträger A wird schematisch in Fig. 2 gezeigt. Der Aufzeichnungsträger A besteht aus einem Träger T, auf dessen Oberseite eine wärmeempfindliche Schicht WS aufgebracht ist. Diese läßt sich durch unterschiedliche Temperaturen in unterschiedliche optische Zustände überführen, wie anhand von Fig. 1 erläutert wurde. Zur Fortbewegung des Aufzeichnungsträgers A an den nachfolgend beschriebenen Einrichtungen vorbei dienen mindestens die Antriebsrollen R1/R2 und R6/R7, weitere Transportrollen R3, R4 und R5 können zusätzlich vorgesehen sein. Der Antrieb der genannten Transportrollen R1 bis R7 kann entweder durch individuelle Elektromotoren oder mit in Gruppen zusammengefaßten Antrieben weniger Motoren erfolgen. Die Bewegung kann entweder kontinuierlich oder auch schrittweise erfolgen, dies hängt von der Art der Durchführung des Schreibvorgangs ab, wie weiter unten noch näher zu erläutern ist. Auf weitere Vorrichtungen, wie beispielsweise Sensoren für die Feststellung des Vorhandenseins eines Aufzeichnungsträgers A und weitere Sensoren zum richtigen Einsatz des Schreibvorgangs hinsichtlich der Position der aufzubringenden Information auf den Aufzeichnungsträger A wird im Rahmen dieser Beschreibung nicht weiter eingegangen.

Der von den Antriebsrollen R1/R2 erfaßte Aufzeichnungsträger A wird zunächst der Löschvorrichtung L zugeführt, durch welche die in die Schicht eingeprägte Information gelöscht wird, dabei erwärmt die Löschvorrichtung, die entweder direkt auf die Schicht WS einwirkt oder auch auf die der Schicht WS abgewandte Seite des Trägers T einwirkt, den Aufzeichnungsträger A je nach Art der Aufzeichnung (Information transparent/Umgebung opak bzw. Information opak / Umgebung transparent). Es erfolgt die Erwärmung des Aufzeichnungsträgers A entweder auf die Temperatur im Bereich T1 bis T2 oder größer T2.

Die Antriebsrolle R3 kann beispielsweise als neutrale Filzrolle beheizbar ausgebildet sein, es ist jedoch auch denkbar, auf diese zu verzichten und den Aufzeichnungsträger A mit einer festen Filzfläche gegen die Löschvorrichtung L zu drücken. Der Löschvorgang selbst kann auch beispielsweise mittels Heißluft erfolgen, oder die Löschvorrichtung L kann auch als Infrarotstrahler, als Schreibkopf oder auch als Fläche mit gedruckten Wiederständen ausgebildet sein. Sie erstreckt sich wie die übrigen Vorrichtungen K, V und S jeweils über die gesamte Breite des Aufzeichnungsträgers A. Zur Überwachung und Regelung der Temperatur der Löschvorrichtung L ist diese mit einem Temperatursensor TS1 ausgestattet. Auch die Antriebsrollen R1/R2 können bereits als Löschvorrichtung ausgebildet sein.

Nach der Löschvorrichtung L durchläuft der Aufzeichnungsträger A einen optischen Sensor SL, welcher entweder stellenweise oder ebenfalls über der gesamten Breite des Aufzeichnungsträgers A angebracht ist. Der optische Sensor SL, gegen welchen der Aufzeichnungsträger A durch die Gegenfläche G1 gedrückt wird, dient zur überprüfung des Löschvorgangs, indem die Signale des optischen Sensors SL ebenfalls zur Temperaturregelung der Löschvorrichtung L herangezogen werden können. Der optische Sensor SL kann auch berührungslos mit oder ohne Optik ausgebildet sein.

Nach dem Löschvorgang wird der Aufzeichnungsträger A in einer Kühlvorrichtung K auf die Umgebungstemperatur, beispielsweise die Zimmertemperatur abgekühlt. Der Kühlvorgang kann beispielsweise durch das Bestreichen des Aufzeichnungsträgers A mit Luft erfolgen, welche die Temperatur der Umgebung aufweist oder auch mit entsprechend gekühlter Luft. Weiterhin ist auch denkbar, den Aufzeichnungsträger A an einer entsprechenden Platte mit Peltier-Elementen oder auch mit Absorbtions-Kühlelementen vorbeizubewegen, dabei ist wiederum eine nicht gezeigte Vorrichtung zum Andrücken des Aufzeichnungsträgers A an die genannte Einrichtung notwendig. Zur Überwachung des Kühlvorgangs ist die Kühlvorrichtung K mit einem Temperatursensor TS2 versehen. Der optische Sensor SL kann auch derart angebracht sein, daß der Aufzeichnungsträger A nach dem Kühlvorgang überwacht wird.

Das Aufbringen von Informationen auf den Aufzeichnungsträger A oder genauer gesagt auf die wärmeempfindliche Schicht WS erfolgt durch die Schreibvorrichtung S. Diese ist, wie alle übrigen Vorrichtungen fest angeordnet, während der Aufzeichnungsträger A daran vorbeibewegt wird. Die Schreibvorrichtung kann beispielsweise durch erwärmbare Widerstände, einen Gas- oder Festkörperlaser oder auch als energiereiche (Infrarot) Leuchtdioden-Anordnung ausgebildet sein. Der Aufbau eines sogenannten Thermokopfes ist beispielsweise in der DE-PS 31 25 259 beschrieben. Bei einem derartigen Thermokopf sind kleine Widerstandselemente auf einem Substrat entweder streifenförmig oder auch matrixförmig angeordnet, wodurch das Aufbringen einer Information auf die wärmeempfindliche Schicht WS entweder punktweise oder zeichenweise möglich ist. Bei der matrixförmigen Anordnung sind beispielsweise 35 Widerstandselemente in 7 Zeilen zu 5 Spalten angeordnet, wodurch sich jeder beliebige Buchstabe, jede Zahl oder auch jedes Zeichen wiedergeben läßt. Dabei werden entsprechend den zu schreibenden Zeichen nur die betreffenden Widerstände erwärmt, um auf der Schicht WS die entsprechenden Informationen aufzubringen. Das heißt, daß beispielsweise diejenigen Widerstände erwärmt werden, deren entsprechende Stellen auf der Schicht WS transparent werden sollen. Bei dem zeichenweisen Schreibvorgang erfolgt die Fortbewegung des Aufzeichnungsträgers A schreib-zeilen-weise. Eine andere Art des Schreibvorgangs kann darin bestehen, daß jeweils nur eine Zeile von Punkten auf den Aufzeichnungsträger A geschrieben werden können und die Fortbewegung des Aufzeichnungsträgers A kontinuierlich oder schrittweise ist und erst nach beispielsweise 7 Zeilen ein vollständiges Zeichen einer Schreibzeile auf den Aufzeichnungsträger A übertragen ist.

Für den Fall der Aufzeichnung mittels Kontaktwärme kann der Aufzeichnungsträger A durch eine Andruckrolle R gegen die Schreibvorrichtung S, die ebenfalls mit einem Temperatursensor TS4 ausgestattet ist, gepreßt werden. Zur Beschleunigung des Schreibvorgangs kann der Aufzeichnungsträger A oder auch die wärmeempfindliche Schicht WS durch eine Vorwärmvorrichtung V vorgewärmt werden. Diese kann beispielsweise in die Andruckrolle R5 integriert sein, die zu diesem Zweck mit einer auf einem wärmeisolierenden Kern IS aufgebrachten wärmeleitenden Schicht MS versehen ist, welche durch eine Wärmevorrichtung W mit einer Wärmequelle erwärmt wird, um durch die Vorwärmung des Aufzeichnungsträgers A bzw. der wärmeempfindlichen Schicht WS den Schreibvorgang, welcher durch die Schreibvorrichtung S durchgeführt wird, zu beschleunigen. Die Vorwärmvorrichtung V erwärmt die Schicht WS des Aufzeichnungsträgers A auf eine vierte Temperatur, welche zwischen der ersten Temperatur T0 und der zweiten Temperatur T1 bzw. der dritten Temperatur T2 liegt.

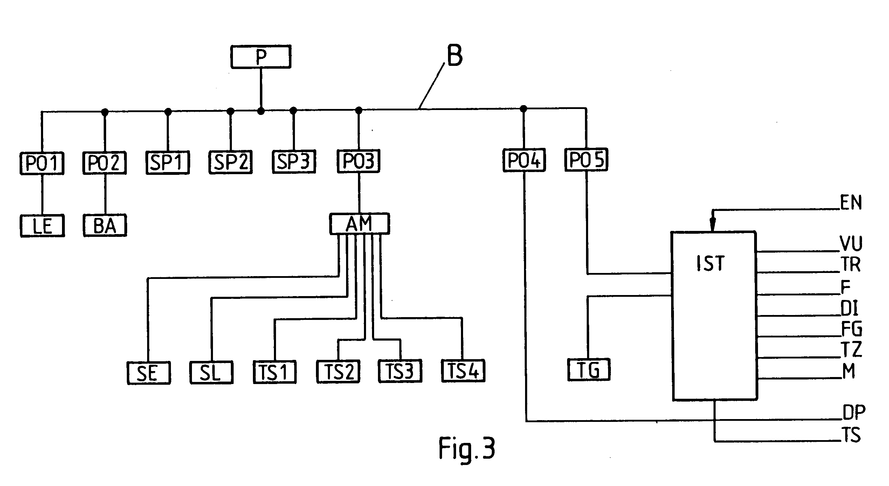

Die Temperatur der Vorwärmvorrichtung V wird durch einen Temperatursensor TS3 überwacht und durch den Prozessor P (Fig. 3) gesteuert. Zusätzlich zur Steuerung der Energiezufuhr zur Vorwärmvorrichtung V wird das Signal des Temperatursensors TS3 auch zur Beeinflussung der Druckparameter benutzt, damit werden dynamische Schwankungen der Temperatur der Vorwärmvorrichtung V, verursacht durch die Ableitung von Wärme durch den Aufzeichnungsträger A selbst, bei dem Schreibvorgang ausgeglichen.

Die Wärmequelle WQ kann beispielsweise als Infrarotstrahler ausgebildet sein. Es ist ebenso denkbar, eine feste Vorwärmvorrichtung V in Bewegungsrichtung des Aufzeichnungsträgers A vor der Schreibvorrichtung S oder auch unterhalb derselben anzuordnen, wobei diese, in welcher Form auch immer ausgebildet, ebenfalls mit einem Temperatursensor TS3 ausgestattet ist.

Die auf die wärmeempfindliche Schicht WS durch die Schreibvorrichtung S aufgebrachte Information wird durch einen optischen Sensor SE überwacht, gegen welchen der Aufzeichnungsträger A durch die Gegenfläche G2 gedrückt wird. Der optische Sensor SE kann ebenso wie der optische Sensor SL ausgebildet sein. Die Signale des optischen Sensors SE dienen zur Steuerung der Temperatur der Schreibvorrichtung S.

Bei der in dem Blockschaltbild gemäß Fig. 3 gezeigten Steuereinrichtung der erfindungsgemäßen Vorrichtung wird davon ausgegangen, daß die gezeigte Steuereinrichtung nur zum Steuern der internen Abläufe im Rahmen des Lösch- oder Schreibvorgangs dient, auf die Behandlung der aufzuzeichnenden Informationen selbst wird im Rahmen dieser Beschreibung nicht weiter eingegangen.

Die Steuereinrichtung besteht aus einem Prozessor P, an welchem ein Bussystem B angeschlossen ist. Über dieses Bussystem findet der Informationsaustausch mit der Peripherie und den Speichern SP1 bis SP3 statt. Als Schnittstelle zur Peripherie dienen die I/O Ports PO1 bis PO5. Über den I/O-Port PO1 ist eine Leseeinrichtung LE angeschlossen. Bei dieser Leseeinrichtung kann es sich beispielsweise um einen Chipkartenleser handeln, wobei die Chipkarte Druckparameter enthält und bei Aufzeichnungsträgern mit unterschiedlichen Lösch- und Schreibtemperaturen mit Hilfe entsprechender Chipkarten die erfindungsgemäße Vorrichtung hinsichtlich der Lösch- und Schreibtemperaturen an den jeweiligen Aufzeichnungsträger angepaßt werden kann. Die Leseeinrichtung LE kann jedoch auch zum Lesen von auf der der wärmeempfindlichen Schicht WS abgewandten Seite des Trägers T aufgebrachten Informationen, beispielsweise in Form eines Balkencodes, verwendet werden, wobei wiederum der Balkencode Hinweise auf die jeweilige Lösch- und Schreibtemperatur gibt und die entsprechenden Druckparameter, die in einem der Speicher SP1 bis SP3 enthalten sind, ausgewählt werden können. Weitere Einzelheiten hinsichtlich der Verwendung eines derartigen Balkencodes auf der Rückseite des Aufzeichnungsträgers lassen sich der deutschen Patentanmeldung P 39 27 826.3 entnehmen.

An dem I/O Port PO2 ist die Bedienungs- und Anzeigevorrichtung BA angeschlossen, sie dient zur manuellen Steuerung und Einstellung von Betriebsvorgängen und zur Anzeige von Betriebszuständen.

Die optischen Sensoren SE und SL und die Temperatursensoren TS1 bis TS4 ( Fig. 2) sind an einem analogen Multiplexer AM angeschlossen, welcher die Analogsignale in Digitalsignale umwandelt und dem I/O Port PO3 übergibt, an welchem dieser angeschlossen ist.

Eine von einem Taktgeber TG gesteuerte interne Ablaufsteuerung IST dient, wie weiter unten noch ausführlich erläutert, zur Steuerung der internen Abläufe, sie ist an dem I/O Port PO5 angeschlossen. Die Druckparameter werden über den I/O Port PO4 ausgegeben, an welchen die Leitung DP angeschlossen ist. Die interne Ablaufsteuerung IST kann selbstverständlich auch in den Prozessor P integriert sein.

In einem der Speicher SP1 bis SP3 ist das Programm des Prozessors P abgelegt, welcher aufgrund von Informationen aus der Peripherie Steuerbefehle erzeugt, die an die Peripherie abgegeben werden. Einer der Speicher SP1 bis SP3 dient als Arbeitsspeicher, in welchem vorläufige erarbeitete oder zu erarbeitende Informationen abgelegt werden.

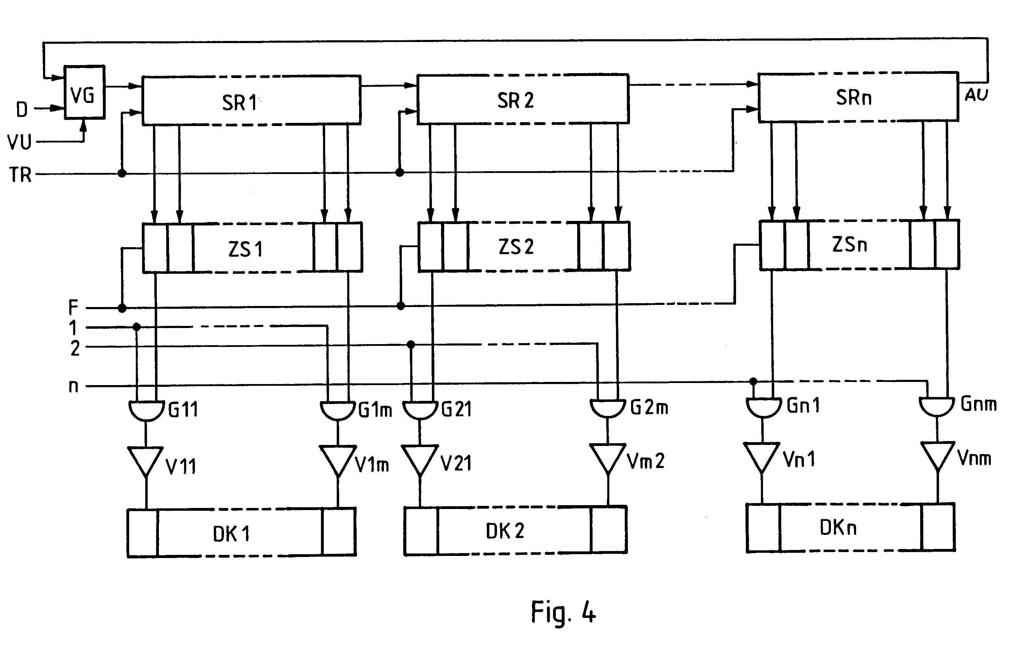

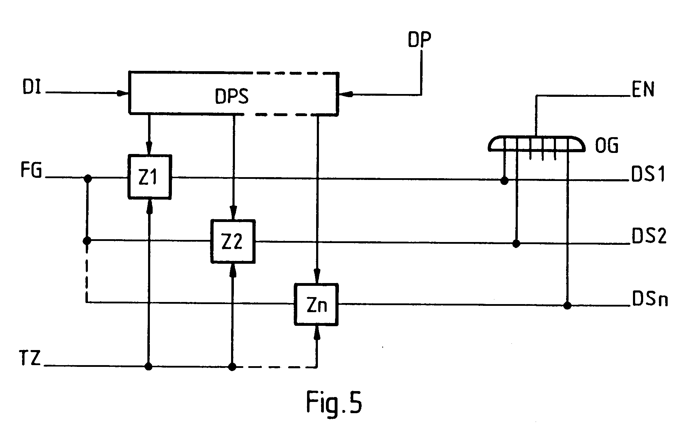

In den Blockschaltbildern gemäß Fig. 4 und Fig. 5 werden die Anordnungen zur Erzeugung der Ansteuersignale für die Schreibvorrichtung S gemäß Fig. 2 gezeigt. Die Schreibvorrichtung S besteht aus einer Vielzahl von aneinandergereihten, einer Schreibzeile entsprechenden Einzelblöcken DK1 bis DKn, wobei sämtliche thermisch lose miteinander verkoppelte Blöcke DK die gleichen Abmessungen und einen eigenen nicht gezeigten Temperatursensor aufweisen, d. h. daß der in Fig. 2 gezeigte Temperatursensor TS4 im Grunde genommen aus n Temperatursensoren besteht. Jeder Temperatursensor eines Blockes DK ist mit einer eigenen Leitung mit dem analogen Multiplexer AM gemäß Fig. 3 verbunden. Ein Block DK kann nun, wie bereits eingangs erwähnt, entweder derart ausgebildet sein, daß dieser nur die punktförmigen Widerstandselemente einer einzigen Zeile aufweist oder er kann auch eine matrixförmige Anordnung von Widerstandselementen enthalten, welche das gleichzeitige Schreiben vollständiger Buchstaben, Ziffern oder Zeichen ermöglicht. Jedes einzelne Widerstandselement oder auch Halbleiterelement, welches auf dem gemeinsamen Substrat eines Blockes DK zusammen mit dem Temperatursensor angeordnet ist, wird über einen individuellen Verstärker V angesteuert. Für die Informationen eines Blockes DK ist ein Schieberegister SR und ein Zwischenspeicher ZS mit je einer Bitstelle pro Verstärker V vorhanden, die Schreibvorrichtung weist somit n Schieberegister SR und n Zwischenspeicher ZS auf. Die Schieberegister SR1 bis SRn sind hintereinander geschaltet und nehmen die gesamte Schreibinformation einer Punkt- oder Schriftzeile auf.

Die Schreibinformation wird dem Eingang D zugeführt, wobei auf die Erzeugung derselben im Rahmen dieser Beschreibung nicht weiter eingegangen wird. Bei einem Faximilegerät entspricht die Schreibinformation der Abtastinformation einer Abtastzeile des Gegengeräts, während bei der Verwendung als Drucker die Schreibinformation, die beispielsweise in Form von ASCII-Zeichen vorliegt, in einem entsprechenden Zeichengenerator in die entsprechende Punktinformation der Matrix umgewandelt wird.

Bedingt durch die thermische Trägheit der Widerstandselemente ist bei Beginn eines neuen Schreibzyklus die Anfangstemperatur eines Widerstandselementes, welches gerade einen Punkt geschrieben hat, eine andere als die eines Widerstandselements, welches für mindestens einen Schreibzyklus im Ruhezustand (nicht aktiviert) verblieben ist. Um für beide Situationen einheitliche Verhältnisse zu schaffen, müssen diejenigen Widerstandselemente, welche im vorangegangenen Schreibzyklus nicht aktiviert waren, durch einen Vorpuls auf die gleich Anfangstemperatur gebracht werden, damit diese die gleiche Temperatur aufweisen, wie diejenigen Widerstandselemente, die während des vorangegangenen Schreibzyklus aktiv waren.

Die Schreibinformation für den Eingang D muß bei dem vorliegenden Beispiel somit zweimal hintereinander eingegeben werden. Bei dem ersten Ladevorgang wird über den Steuereingang WU der Vergleicher VG aktiviert, so daß die am Ausgang AN des Schieberegisters SRn austretende Information des vorangegangen Schreibvorgangs dem Vergleicher VG zugeführt wird und durch Vergleich mit der neuen Schreibinformation am Eingang D die Vorwärminformation ermittelt wird, welche Schreibelemente der Blöcke DK bei dem vorangegangenen Schreibvorgang nicht erwärmt worden sind. Nachdem nun die gesamte Information einer Zeile sich in den Schieberegistern SR gesteuert durch den Fortschaltetakt TR befindet, sind diejenigen Widerstandselemente in den Schieberegistern SR1 bis SRn markiert, welche bei dem vorangegangenen Schreibvorgang nicht erwärmt worden sind. Über die Freigabeleitung F wird die Übergabe der im Schieberegister SR befindlichen Information an den Zwischenspeicher ZS gesteuert. Über den Ausgang des Zwischenspeichers ZS wird das entsprechende Gatter G vorbereitet. Nach der Übernahme der Information aus dem Schieberegister SR in den Zwischenspeicher ZS ist das Schieberegister SR wieder frei und kann die Information am Eingang D des Vergleichers VG, welcher bei dem nächsten Ladevorgang gesperrt wird, direkt übernehmen.

Über die Leitungen DS1 bis DSn wird die Dauer der Erwärmung der Widerstandselemente in den Blöcken DK1 bis DKn sowohl während des Vorwärmvorgangs als auch während des Schreibvorgangs gesteuert, und zwar in Abhängigkeit von den Signalen der Temperatursensoren TS4 in den Blöcken DK1 bis DKn bzw. von den Signalen des Temperatursensors TS3 der Vorwärmeinrichtung und/oder von anderen Druckparametern (Art des Aufzeichnungsträgers, bzw. Informationen der Chipkarte, usw.).

Die Druckparameter werden aus verschiedenen Faktoren durch den Prozessor P (Fig. 3) ermittelt, und zwar aus der Art des Aufzeichnungsträgers A (jeweiliger Schreibund Löschtemperaturbereich), der Kontrastmessung durch den optischen Sensor SE, der Temperatur der Vorwärmvorrichtung V (Temperatursensor TS3) und der Temperatur der Schreibvorrichtung S (Temperatursensor TS4). Die genannten Werte, welche in digitaler Form dem Prozessor P (Fig. 3) zugeführt werden, dienen zur Ermittlung der Druckparameter, die entweder in den Speichern SP1 bis SP3 abgelegt sind oder dynamisch berechnet werden. Vor dem Freigabesignal F wurden vom Prozessor P die Druckparameter in den Druckparameterspeicher DPS übertragen (Fig. 5). Diese Informationen dienen zur Voreinstellung der Zähler Z1 bis Zn, die über die Leitung FG gesteuert werden. Die Zähler werden anschließend mit dem Takt TZ beaufschlagt und zählen rückwärts auf den Schritt 0 zurück. Während des Laufs des Zählers erscheinen die Freigabesignale an den Leitungen DS1 bis DSn, welche die entsprechenden Gatter G eines Blockes DK freigeben. Die jeweilige Zählerstellung wird durch den Prozessor P (Fig. 3) in Abhängigkeit von dem Signal des jeweiligen Temperatursensors des betreffenden Blockes DK bestimmt. Sobald der letzte Zähler seine Ruhestellung wieder erreicht hat, wird über das ODER-Gatter OG ein Signal EN erzeugt, welches zur Auslösung der weiteren Vorgänge im Rahmen des Schreibvorgangs dient. Durch das Freigabesignal F werden die Zwischenspeicher ZS zur Übernahme der eigentlichen zwischenzeitlich geladenen Schreibinformation aus den Schiebregistern SR freigegeben, wodurch wieder eine vorbereitende Freigabe der betreffenden Gatter G erfolgt. Die Druckparameter DP werden wieder in den Druckparameterspeicher DPS geladen, und zwar diesmal diejenigen für den eigentlichen Schreibvorgang, dies wird durch die Leitung DI gekennzeichnet. Die Einstellung und das Herunterzählen der Zähler Z1 bis Zn geschieht in der bereits beschriebenen Weise, wodurch eine Freigabe der Gatter G erfolgt und über die Verstärker V die Widerstandselemente der Blöcke DK erwärmt werden.

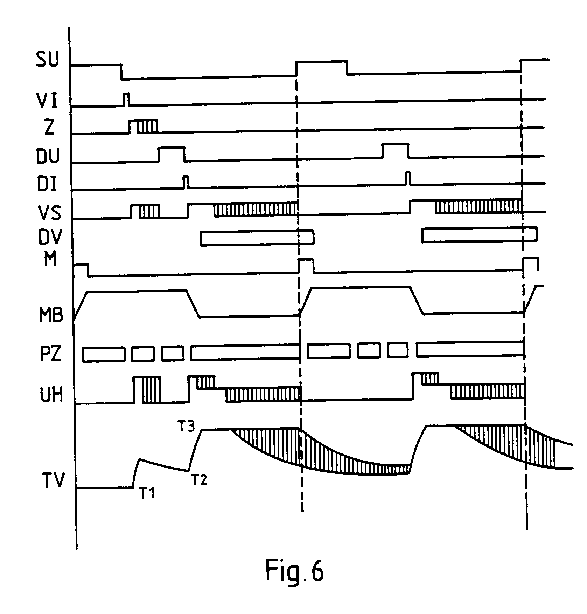

Das Diagramm in Fig. 6 zeigt die zeitlichen Abläufe der beschriebenen Vorgänge. In der Zeile SU wird das Laden der Vorheizinformation angegeben, VI kennzeichnet das Laden der Parameter für den Vorheizvorgang, und die Übergabe der Informationen in die Zwischenspeicher ZS, die Zeile Z gibt die unterschiedliche Dauer der Freigabe der Gatter G im Rahmen des Vorheizvorgangs (s. Fig. 4) an. DU weist auf das Laden der Schreibinformation hin und DI kennzeichnet das Laden der Parameter für den Schreibvorgang in den Druckparameterspeicher DPS (s. Fig. 5). VS zeigt das Fließen von Strom am Ausgang der Verstärker V und DV den eigentlichen Schreibvorgang. Mit M wird der Fortschalteimpuls des Motors bzw. der Motoren gekennzeichnet, welche zur Weiterbewegung des Aufzeichnungsträgers A (s. Fig. 2) dienen. MB zeigt die Bewegung des Motors und PZ die freie Zeit des Prozessors P (s. Fig. 3). UH gibt die Versorgungsspannung der einzelnen Heizelemente oder Widerstände an und TV markiert schließlich den Temperaturverlauf des Substrats eines Blockes DK. Auf der linken Seite der graphischen Darstellung der Zeitabläufe wird davon ausgegangen, daß das betreffende Heiz- oder Widerstandselement bei dem vorangegangenen Schreibvorgang nicht benutzt worden ist und demnach nicht die notwendige Temperatur aufweist, während bei dem darauf- folgenden Schreibvorgang das Heiz- oder Widerstandselement die notwendige Temperatur bereits aufweist und demnach keinen Vorwärmimpuls benötigt. Die senkrechten Markierungen in den Zeilen Z und VS geben an, daß mit Hilfe der Druckparameter die Zähldauer der Zähler Z (s. Fig. 5) veränderbar ist und durch die jeweiligen Temperaturverhältnisse der einzelnen Blöcke DK bestimmt wird.

Um den Aufzeichnungsträger A mit maximaler Geschwindigkeit beschreiben zu können, ist es notwendig, auf der Oberfläche der Widerstandselemente die erforderliche Schreibtemperatur T3 (s. Signal TV) schnellstmöglich zu erreichen und danach für das Schreibintervall konstant zu halten. Würden die Widerstandselemente mit einer konstanten Spannung betrieben, so würde sich die Oberflächentemperatur gemäß einer Exponentialfunktion dem Wert T3 nähern. Der in Fig. 6 gezeigte Verlauf der Temperatur in der Zeile TV wird erzielt, indem zu Beginn eines jeden Schreibzyklus zunächst die zu aktivierenden Widerstandselemente mit einer erhöhten Spannung betrieben werden, welche die Temperatur gemäß einer Exponentialfunktion in Richtung 300 bis 400 Grad C treiben. Sobald die Temperatur den erforderlichen Wert T3 erreicht hat, wird die Betriebsspannung auf einen solchen Wert erniedrigt, daß danach die Temepratur T3 konstant erhalten bleibt (s. Signal UH). Da das Erreichen des Temperaturwerts T3 eine Funktion der Temperatur des Blockes ist, muß die Zeitspanne, für die die erhöhte Spannung anliegt, variierbar sein, was durch einen von dem Prozessor P gesteuerten Timer oder durch die Ablaufsteuerung IST (s. Fig. 3) erfolgt.

Der in Fig. 6 gezeigte Verlauf der Spannung UH kann erzeugt werden, indem beispielsweise die Referenzspannung des Stromversorgungsgeräts für die Widerstandselemente durch das Ausgangssignals eines Timers umgeschaltet wird, dessen Intervall wiederum über einen I/O Port durch den Prozessor P oder die interne Ablaufsteuerung IST gemäß Fig. 3 eingestellt wird. Das Ausgangssignal des Timers, welches das nicht gezeigte Stromversorgungsgerät steuert, ist mit TS gekennzeichnet.

Die in Fig. 2 gezeigte Schreibvorrichtung S, die nach dem Kontaktwärmeprinzip arbeitet, kann durch Einrichtungen ersetzt werden, welche die Energie in Form von Strahlung zuführen. Als Strahlungsquellen kommen Laser, gepulste Xenon-Lampen, konstant sichtbare oder auch unsichtbare Strahlung abgebende Lampen und LED-Ketten in betracht. Bei den Strahlungsquellen, die keine punktförmig gebündelte Energie erzeugen, muß noch ein optischer Verschlußmechanismus dazwischengeschaltet werden Dieser kann beispielsweise ein "LCD-Shutter" oder auch eine Zeile von elektrostatisch oder magnetisch aktivierbaren Fenstern sein. Um in der thermosensitiven-Schicht WS des Aufzeichnungsträgers A die Umwandlung der Strahlungsenergie in Wärme zu beschleunigen, und um den Wirkungskreis der Umwandlung zu verbessern, können in die Schicht Starterpartikel eingelagert werden, wie dies in dem europäischen Patent 0 014 826 beschrieben ist.

Fig. 7a zeigt eine Schreibvorrichtung, welche einen Laserstrahl LS als Energiequelle benutzt. Der Aufzeichnungsträger A wird durch eine Andruckrolle oder eine Gegenfläche G2 mit seiner thermosensitiven Schicht WS gegen eine Glasplatte GP gedrückt, welche auf die Vorheiztemperatur erwärmt ist. Zum Aufzeichnen von Informationen wird der Laserstrahl LS zeilenweise über das Glas geführt und an den Stellen eingeschaltet, an denen ein Punkt aufgezeichnet werden soll. Während des Schreibvorgangs wird dabei der Aufzeichnungsträger A kontinuierlich oder schrittweise weiterbewegt. Die Energie des Laserstrahls LS wird teilweise in der thermosensitiven Schicht WS selbst (unterstützt durch evtl. eingelagerte Starterpartikel) und teilweise auf dem absorbierenden Träger T in Wärme umgewandelt, was dann zur gewünschten Zustandsänderung in der thermosensitiven Schicht WS führt.

Es ist auch denkbar, auf der dem Aufzeichnungsträger A zugewandten Seite der Glasplatte GP eine strahlungsenergie-absorbierende Schicht aufzutragen, welche allerdings durch eine thermisch isolierende Trennschicht von der Glasplatte GP getrennt sein muß. Durch diese Maßnahme wird der Schreibvorgang in ein Kontaktwärmeverfahren überführt. Es ist weiterhin denkbar, die auf der Glasplatte GP aufgebrachte Schicht halb transparent auszuführen, wodurch etwa die Hälfte der Energie oberhalb und die andere Hälfte der Energie unterhalb der thermosensitiven Schicht WS in Wärme umgewandelt wird, wodurch der Umwandlungsvorgang weiter beschleunigt werden kann.

Eine weitere Variante besteht darin, die Glasplatte GP im Bereich des Laserstrahls LS zu teilen oder als Vorheizvorrichtung V unterhalb der Schreibvorrichtung S anzubringen, damit der Laserstrahl LS den Aufzeichnungsträger A direkt beschreiben kann.

Die Dosierung der Energie zum Beschreiben unterschiedlicher thermosensitiver Materialien und zur Kompensation der Schwankungen der Vorwärmtemperatur kann durch folgende Einzelmaßnahmen oder Kombination dieser Maßnahmen erfolgen:
1. Variation der Energie des Laserstrahls
2. Modulation der Pulsbreite
3. Erhöhung der Schreibgeschwindigkeit des Laserstrahls in Verbindung mit erhöhter Fortbewegungsgeschwindigkeit des Aufzeichnungsträgers A.

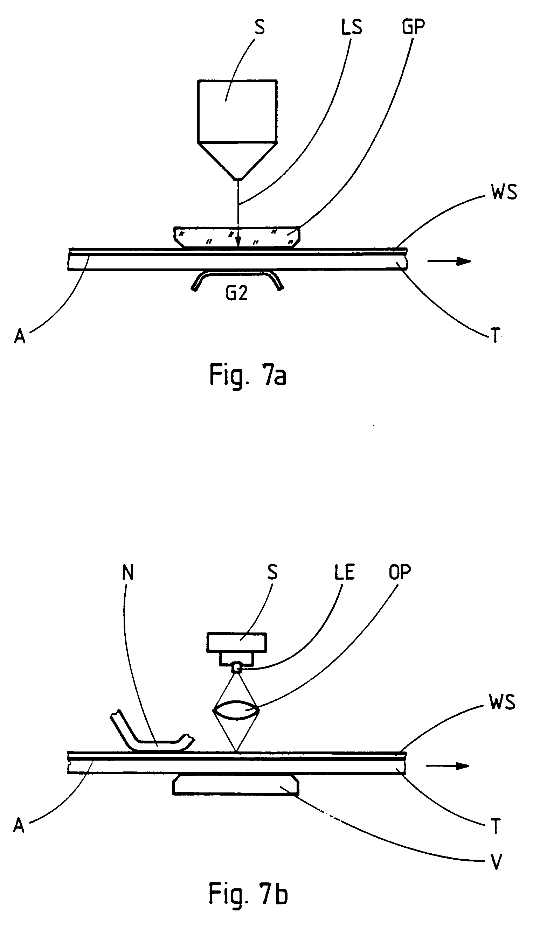

Anstelle des beschriebenen Laserstrahls kann auch eine Zeile von Infrarot oder sichtbares Licht emittierenden Dioden LE verwendet werden, wobei der gegenseitige Abstand der horizontalen Auflösung der zu schreibenden Zeichen einer Schreibzeile entspricht (Fig. 7b). Zum Schreiben einer Zeile werden diejenigen lichtemittierenden Dioden LE kurzzeitig gepulst, unter denen ein Punkt auf den Aufzeichnungsträger A geschrieben werden soll. Um die optische Energie der lichtemittierenden Diode LE auf die zu schreibenden Punkte zu fokussieren, kann optional eine stangenformige Linse OP verwendet werden, die sich über die gesamte Breite des Aufzeichnungsträgers A erstreckt. Vorgewärmt wird der Aufzeichnungsträger A durch eine auf der Unterseite des Aufzeichnungsträgers angeordnete Vorwärmvorrichtung V in Form einer Platte, gegen die der Aufzeichnungsträger A durch die Vorrichtung N gedrückt wird.

Die Dosierung der Energie zum Beschreiben unterschiedlicher thermosensitiver Materialien und zur Kompensation der Schwankungen der Vorwärmtemperatur kann durch folgende Einzelmaßnahmen oder Kombination dieser Maßnahmen erfolgen.
1. Variation der Energie der lichtemittierenden Dioden
2. Modulation der Pulsbreite
3. Verkürzung der Pulsbreiten der lichtemittierenden Dioden in Verbindung mit erhöhter Fortbewegungsgeschwindigkeit des Aufzeichnungsträgers A.

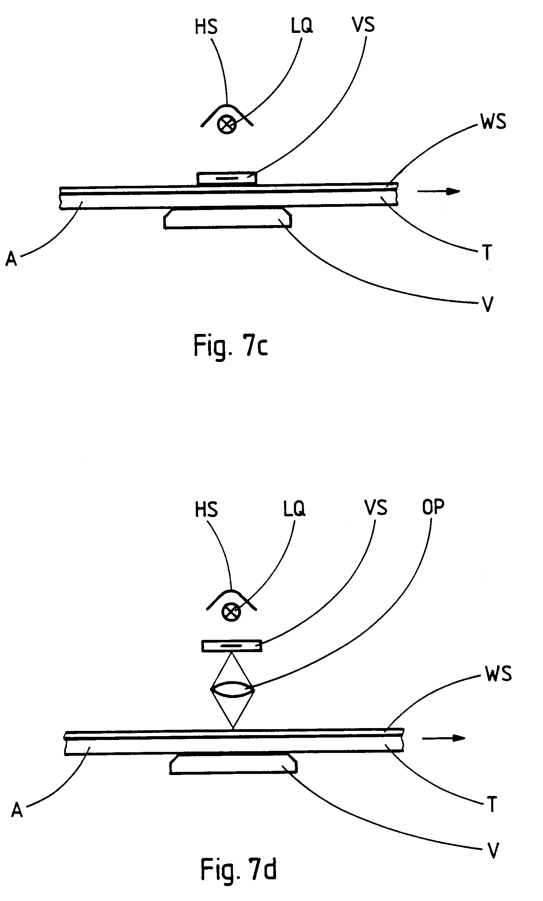

Als Energiequelle kann auch eine röhrenförmige Xenon-Blitzlampe LQ verwendet werden (s. Fig. 7c und 7 d), die sich über die gesamte Breite des Aufzeichnungsträgers A erstreckt und die über beispielsweise einen Hohlspiegel, HS auf die thermosensitive Schicht WS des Aufzeichnungsträgers A fokussiert wird. In diesem Fall ist jedoch zusätzlich ein optischer Verschluß VS erforderlich, der die von der Blitzlampe erzeugte Energie nur an denjenigen Stellen durchläßt, an denen ein Punkt geschrieben werden soll. Als optischer Verschluß VS kann beispielsweise ein LCD-Shutter oder eine Anordnung von elektrostatisch oder magnetisch steuerbaren Fenstern sein, deren gegenseitiger horizontaler Abstand der horizontalen Auflösung der zur beschreibenden Zeilen entsprechen muß.

Der optische Verschluß VS kann entweder direkt über den Aufzeichnungsträger A angeordnet sein oder die von ihm durchgelassenen Lichtblitze werden durch eine stangenförmige Optik OP, die sich über die gesamte Breite des Aufzeichnungsträgers A erstreckt, auf diesen projiziert. Diese Optik OP kann erweitert werden, indem eine Glasplatte GP, wie für den Laserfall beschreiben, dazwischengeschaltet wird, um ggf. durch eine teilweise lichtabsorbierende Schicht die beidseitige Erwärmung der thermosensitiven Schicht WS zu ermöglichen.

Die Xenon-Blitzlampe LQ bezieht die für ihren Betrieb erforderliche elektrische Energie aus einem geladenen Kondensator, der dann beim Zünden der Lampe entladen wird. Die erneute Aufladung erfolgt, während der Aufzeichnungsträger A um eine Zeile weiterbewegt wird.

Die Dosierung der Energie zum Beschreiben unterschiedlicher thermosensitiver Materialien und zur Kompensation der Schwankungen der Vorwärmtemperatur kann durch Variation der Ladespannung des Kondensators evtl. in Verbindung mit erhöhter Vorschubgeschwindigkeit des Aufzeichnungsträgers A erfolgen.

Anstelle der Xenon-Blitzlampe QL kann auch eine Glühfadenlampe in Betracht gezogen werden, wobei allerdings an die Gradlinigkeit des Fadens besondere Anforderungen gestellt werden, da dieser in den optischen Verschluß VS projiziert werden muß. Für die Anordnung der Lampe, Fokussierung und Anordnung des optischen Verschlusses VS gilt das gleiche wie für die Xenon-Blitzlampe QL.

Die Dosierung der Energie zum Beschreiben unterschiedlicher thermosensitiver Materialien und zur Kompensation der Schwankungen der Vorwärmtemperatur kann durch Variation der Betriebsspannung der Lampe evtl. in Verbindung mit der Veränderung der Vorschubgeschwindigkeit des Aufzeichnungsträgers A erfolgen.
Die Steuerung der Intensität des Laserstrahls LS, bzw. der lichtemittierenden Dioden LE bzw. der Öffnungsdauer des optischen Verschlusses VS bezogen auf den einzelnen zu schreibenden Punkt kann in gleicher Weise wie die Steuerung der Erwärmung der Widerstandselemente gemäß den Fig. 3 bis 5 erfolgen, die dort beschreibenden Maßnahmen hinsichtlich des Vorwärmimpulses werden jedoch in diesen Fällen nicht benötigt. Während anstelle der Blöcke DK die entsprechenden Leuchtdioden LE bzw. optischen Verschlüsse VS treten, wobei für jeden aufzuzeichnenden Punkt auf den Aufzeichnungsträger A eine Leuchtdiode bzw. ein steuerbares Fenster des Verschlusses VS tritt, wird das Ausgangssignal der Gatter G durch geeignete Mittel zur Modulation des Laserstrahls LS verwendet. Die Einschaltdauer der einzelnen Leuchtdioden LE bzw. die Öffnungsdauer der einzelnen Fenster des Verschlusses VS wird durch die Druckparameter in der beschriebenen Weise bestimmt, während die Intensität bzw. die Verweildauer des über den Aufzeichnungsträger A zeilenweise bewegten Laserstrahls LS für jeden aufzuzeichnenden Punkt ebenfalls in Abhängigkeit von den Druckparametern bestimmt wird, wie dies bezüglich der Fig. 3 bis 5 beschrieben ist.

Es wird noch darauf hingewiesen, daß über die Bedien- und Anzeigevorrichtung BA gemäß Fig. 3 die erfindungsgemäße Vorrichtung beispielsweise manuell dahingehend eingestellt werden kann, daß diese nur zur Durchführung von Löschvorgängen dient. Der Aufzeichnungsträger A gemäß Fig. 2 ist blattförmig ausgebildet und zwar beispielsweise in den Abmessungen gängiger Papierformate.

Weiterhin kann die erfindungsgemäße Vorrichtung auch mit anderen herkömmlichen Druckmechanismen kombiniert werden, wobei bei Vorhandensein eines mehrteiligen Magazins eine automatische Umschaltung auf das jeweilige Druckwerk in Abhängigkeit von der Art des vorliegenden Aufzeichnungsträgers (Thermopapier, löschbarer Aufzeichnungsträger, Standardpapier) erfolgt, bzw. die Umschaltung vor dem Papiereinzug manuell erfolgt.

## Patentansprüche

1. Vorrichtung zum spalten- und zeilenweisen Aufbringen von Informationen auf einen, eine Schicht mit durch unterschiedliche Temperaturen beeinflußbaren optischen Eigenschaften aufweisenden Aufzeichnungsträger, wobei ausgehend von einer ersten Temperatur (beispielsweise Zimmertemperatur) und einem ersten Zustand (z.B. opak) die Schicht durch Erwärmung auf eine zweite Temperatur in einen zweiten optischen Zustand (z.B. klar) veränderbar ist und diese Änderung nach Abkühlen auf die erste Temperatur permanent erhalten bleibt, dabei kann diese Zustandsänderung rückgängig gemacht werden, indem die Schicht, ausgehend von der ersten Temperatur und dem zweiten Zustand auf eine dritte Temperatur erwärmt und anschließend wieder abgekühlt wird, dabei ist die zweite Temperatur größer als die erste Temperatur und die dritte Temperatur größer als die zweite Temperatur, mit einer Löschvorrichtung (L), einer Kühlvorrichtung (K), und einer Schreibvorrichtung (S), die der blattförmig ausgebildete Aufzeichnungsträger (A) nacheinander in der angegebenen Reihenfolge jeweils über die volle Breite des Aufzeichnungsträgers (A) durchläuft, dadurch gekennzeichnet, daß die Löschvorrichtung (L) die Schicht (WS) auf die dritte Temperature (T2) bzw. die zweite Temperatur (T1) erwärmt, die Kühlvorrichtung (K) die Schicht (WS) auf die erste Temperatur (TO) abkühlt, eine Vorwärmvorrichtung (V) vorhanden ist, die die Schicht (WS) auf eine vierte Temperatur erwärmt, welche zwischen der ersten (TO) und der zweiten Temperatur (T1) bzw. der dritten Temperatur (T2) liegt und die Schreibvorrichtung (S) die betreffenden Stellen der Schicht (WS) in Abhängigkeit von der aufzuzeichnenden Information auf die dritte Temperatur (T2) bzw. die zweite Temperatur (T1) erwärmt, wobei die Vorwärmvorrichtung (V) sehr nahe an Schreibvorrichtung (S) angeordnet ist oder einen Teil derselben bildet und die Schreibenergie in Abhängigkeit von den Signalen thermischer und/oder optischer Sensorvorrichtungen (SE, TS) geregelt wird, wobei durch die optische Sensorvorrichtung (SE) die von der Schreibvorrichtung (S) auf den Aufzeichnungsträger (A) aufgebrachten Informationen überprüft werden.

2. Vorrichtung nach Anspruch 1,
dadurch gekennzeichnet,
daß die Vorwärmvorrichtung (V) auf die der Schicht (WS) abgewandten Seite des Aufzeichnungsträgers (A) wirkt.

3. Vorrichtung nach Anspruch 2,
dadurch gekennzeichnet,
daß die Vorwärmvorrichtung (V) in den Bereich der Schreibvorrichtung (S) reicht.

4. Vorrichtung nach einem der Ansprüche 1 bis 3,
dadurch gekennzeichnet,
daß die Vorwärmvorrichtung (V) als Andruckrolle (R5) für die Schreibvorrichtung (S) ausgebildet ist.

5. Vorrichtung nach einem der Ansprüche 1 bis 4,
dadurch gekennzeichnet,
daß die Temperatur der Löschvorrichtung (L) durch die Signale einer zweiten optischen Sensorvorrichtung (SL) gesteuert wird, durch welche der gelöschte Aufzeichnungsträger (A) überprüft wird.

6. Vorrichtung nach einem der Ansprüche 1 bis 5,
dadurch gekennzeichnet,
daß in der Löschvorrichtung (L) und/oder in der Kühlvorrichtung (K) und/oder Vorwärmvorrichtung (V) und/oder in der Schreibvorrichtung (S) jeweils Temperatursensoren (TS1, TS2, TS3, TS4) vorgesehen sind und die Temperaturen der betreffenden Vorrichtungen (L, K, V, S) in Abhängigkeit von den Signalen der Temperatursensoren (TS1 bis TS4) geregelt werden.

7. Vorrichtung nach einem der Ansprüche 1 bis 6,
dadurch gekennzeichnet,
daß eine Steuereinrichtung (P) vorgesehen ist, welcher die Signale der optischen Sensoren (SE, SL) und/oder der Temperatursensoren (TS1 bis TS4) zugeführt werden, welche die Temperatur der Löschvorrichtung (L), der Kühlvorrichtung (K), der Vorwärmvorrichtung (V) und/oder der Schreibvorrichtung (S) regelt.

8. Vorrichtung nach Anspruch 7,
dadurch gekennzeichnet,
daß die Steuereinrichtung (P) die Temperatur der Vorwärmvorrichtung (V) und/oder der Schreibvorrichtung (S) in Abhängigkeit von der auf den Aufzeichnungsträger aufzuzeichnenden Information regelt.

9. Vorrichtung nach einem der Ansprüche 7 oder 8,
dadurch gekennzeichnet,
daß die Schreibinformation einer Zeile mit der Schreibinformation der vorangegangenen Zeile logisch verknüpft wird, daß die erstmals zu beschreibenden Spalten ermittelt werden und daß die Vorwärmvorrichtung (V) und/oder die Schreibvorrichtung (S) bei den ermittelten Spalten vor dem eigentlichen Schreibvorgang auf eine bestimmte Temperatur erwärmt werden.

10. Vorrichtung nach einem der Ansprüche 7 bis 9,
dadurch gekennzeichnet,
daß die Werte der Temperatursensoren (TS1 bis TS4) und/oder der optischen Sensoren (SE, SL) mit den Werten verglichen werden, die in einem oder mehreren Speichern der Steuereinrichtung (P) vorhanden sind.

11. Vorrichtung nach Anspruch 10,
dadurch gekennzeichnet,
daß die Werte teilweise oder vollständig in dem Speicher einer Chipkarte enthalten sind, wobei an der Steuereinrichtung (P) eine entsprechende Lesevorrichtung (LE) angeschlossen ist.

12. Vorrichtung nach einem der Ansprüche 10 oder 11,
dadurch gekennzeichnet,
daß eine Lesevorrichtung (LE) vorgesehen ist, daß der Aufzeichnungsträger (A) Informationen enthält, welche vor Beginn des Lösch- bzw. Schreibvorgangs durch die Lesevorrichtung (LE) aufgenommen und der Steuereinrichtung (P) zugeführt werden und daß die Informationen Angaben über die erforderlichen Lösch und/oder Schreibtemperaturen enthalten.

13. Vorrichtung nach einem der vorangegangenen Ansprüche,
dadurch gekennzeichnet,
daß die Schreibvorrichtung (S) abschaltbar ist.

14. Vorrichtung nach einem der Ansprüche 1 bis 3,
dadurch gekennzeichnet,
daß die Schreibvorrichtung (S) als Laserstrahlquelle ausgebildet ist, wobei der Laserstrahl (LS) zeilenweise über den Aufzeichnungsträger (A) geführt wird und entsprechend der aufzuzeichnenden Informationen ein- bzw. ausgeschaltet wird und die Energie des Laserstrahls (LS) bzw. die Einschaltdauer in Abhängigkeit von den Signalen der optischen Sensorvorrichtung (SE) geregelt wird.

15. Vorrichtung nach einem der Ansprüche 1 bis 13,
dadurch gekennzeichnet,
daß die Schreibvorrichtung (S) als in einer Zeile angeordnete lichtemittierende Dioden (LE) ausgebildet ist und bedarfsweise deren Lichtstrahlen durch eine stangenförmige Linse (OP) fokussiert werden, wobei für jeden aufzuzeichnenden Punkt eine Diode vorgesehen ist und diese entsprechend der aufzuzeichnenden Informationen ein- bzw. ausgeschaltet wird und die Energie der Dioden bzw. deren Einschaltdauer in Abhängigkeit von den Signalen der optischen Sensorvorrichtung (SE) geregelt wird.

16. Vorrichtung nach einem der Ansprüche 1 bis 13,
dadurch gekennzeichnet,
daß die Schreibvorrichtung (S) aus einer röhrenförmigen Lichtquelle (LQ) und einem zwischen dieser und dem Aufzeichnungsträger (A) angeordneten optischen Verschluß (VS) gebildet wird, wobei die Öffnungsdauer des Verschlusses (VS), welcher den Lichtstrahl für jeden aufzuzeichnenden Punkt steuert, bzw. die Energie der Lichtquelle (LQ) in Abhängigkeit von den Signalen der optischen Sensorvorrichtung (SE) geregelt wird.

## Claims

1. Device for recording information in columns and rows on a data carrier having a layer with optical properties which can be influenced by different temperatures, such that, starting from a first temperature (for example, room temperature) and a first optical state (e.g., opaque), the layer can be changed to a second optical state (e.g., transparent) by heating to a second temperature, and this change can be rendered permanent by cooling to the first temperature and can later be reversed by heating the layer, which is now in the second optical state, from the first temperature to a third temperature and then cooling it again, such that the second temperature is greater than the first temperature, and the third temperature is greater than the second temperature, with an erasing device (L), a cooling device (K), and a recording device (S), which the sheetlike data carrier (A) passes in succession through the indicated devices, each of which extends over the full width of the data carrier (A), characterised in that the erasing device (L) heats the layer (WS) to the third temperature (T2) or to the second temperature (T1), the cooling device (K) cools the layer (WS) to the first temperature (T0), a preheating device (V) is provided, which heats the layer (WS) to a fourth temperature, which lies between the first temperature (T0) and the second temperature (T1) respectively the third temperature (T2), and the recording device (S) heats the appropriate sites on the layer (WS) to the third temperature (T2) respectively the second temperature (T1), as a function of the information to be recorded; whereby the preheating device (V) is situated very close to the recording device (S) or is actually part of the latter and the recording energy is controlled as a function of the signals of the thermal and/or optical sensing devices (SE, TS), and the information recorded on the data carrier (A) by the recording device (S) is checked by the optical sensing device (SE).

2. Device in accordance with claim 1, characterised in that the preheating device (V) effects the side of the data carrier (A) opposite of the layer (WS).

3. Device in accordance with claim 2, characterised in that the preheating device (V) extends into the region of the recording device (S).

4. Device in accordance with any of claims claim 1 to 3, characterised in that the preheating device (V) is formed as a pressure roller (R5) for the recording device (S).

5. Device in accordance with any of claims 1 to 4, characterised in that the temperature of the erasing device (L) is controlled by the signals of a second optical sensor (SL), which checks the erased data carrier (A).

6. Device in accordance with any of claims 1 to 5, characterised in that temperature sensors (TS1, TS2, TS3, TS4) are provided in the erasing device (L) and/or in the cooling device (K) and/or in the preheating device (V) and/or in the recording device (S), and that the temperatures of the devices (L, K, V, S) are controlled as a function of the signals of the temperature sensors (TS1 to TS4).

7. Device in accordance with any of claims 1 to 6, characterised in that a control device (P) is provided, to which the signals of the optical sensors (SE, SL) and/or the signals of the temperature sensors (TS1 to TS4) are supplied, and which controls the temperature of the erasing device (L), the cooling device (K), the preheating device (V) and/or the recording device (S).

8. Device in accordance with claim 7, characterised in that the control device (P) controls the temperature of the preheating device (V) and/or the recording device (S) as a function of the information to be recorded on the data carrier.

9. Device in accordance with either of claims 7 or 8, characterised in that the recorded information of one line is logically connected with the recorded information of the preceding line, that the columns to be recorded first are determined, and that the preheating device (V) and/or the recording device (S) are heated to a certain temperature in the determined columns before the actual recording process.

10. Device in accordance with any of claims 7 to 9, characterised in that the values of the temperature sensors (TS1 to TS4) and/or the values of the optical sensors (SE, SL) are compared with the values stored in one or more memories of the control device (P).

11. Device in accordance with claim 10, characterised in that the values are partially or completely contained in the memory of a chipcard, and that a suitable reading device (LE) is connected to the control device (P).

12. Device in accordance with either of claims 10 or 11, characterised in that a reading device (LE) is provided, that the data carrier (A) contains information, which is read by the reading device (LE) before the beginning of the erasing or recording process and supplied to the control device (P), and that this information includes data on the necessary erasing and/or recording temperatures.

13. Device in accordance with claim 1, characterised in that the recording device (S) can be switched off.

14. Device in accordance with any of claims 1 to 3, characterised in that the recording device (S) is designed as a laser beam source, whereby the laser beam (LS) passes line by line over the data carrier (A) and is switched on and off according to the information to be recorded, and that the energy of the laser beam (LS) or the length of time the laser beam is turned on is controlled by the signals produced by the optical sensor (SE).

15. Device in accordance with any of claims 1 to 13, characterised in that the recording device (S) is designed as light-emitting diodes (LE) arranged in a row, the light beams of which may be focused, by a bar-shaped lens (OP), such that one diode is provided for each point to be recorded, and each diode is switched on or off according to the information to be recorded, and that the energy of the diodes or the interval of time they are turned on is controlled by the signals of the optical sensor (SE).

16. Device in accordance with any of claims 1 to 13, characterised in that the recording device (S) consists of a tubular light source (LQ) and an optical shutter (VS) located between the light source and the data carrier (A), such that the open time of the shutter (VS), which controls the light beam for each point to be recorded, or the energy of the light source (LQ) is controlled by the signals of the optical sensor (SE).

## Revendications

1. Dispositif pour porter des informations ligne par ligne et par colonne sur un support d'enregistrement présentant une couche à propriétés optiques pouvant être modifiées par des températures différentes, cette couche pouvant, en partant d'une première température (température du local par exemple) et d'un premier état (opaque par exemple) passer par échauffement à une deuxième température dans un deuxième état optique (transparent par exemple), et cette modification restant conservée de manière permanente après refroidissement à la première température, cette modification d'état pouvant être rendue annulable par le fait que la couche est, en partant de la première température et du deuxième état, échauffée à une troisième température puis à nouveau refroidie, la deuxiéme température étant supérieure à la première température et la troisième température supérieure à la deuxième température, avec un dispositif d'effacement (L), un dispositif de refroidissement (K) et un dispositif d'écriture (S), qui parcourt successivement dans l'ordre indiqué le support d'enregistrement (A) réalisé en forme de feuille, chaque fois sur toute la largeur du support d'enregistrement (A), **caractérisé** en ce que le dispositif d'effacement (L) échauffe la couche (WS) à la troisième température (T2) ou, selon le cas, à la deuxième température (T1), le dispositif de refroidissement (K) refroidit la couche (WS) à la première température (T0), un dispositif de préchauffage (V) est présent, qui échauffe la couche (WS) à une quatrième température qui se situe entre la première température (T0) et la deuxième température (T1) ou, selon le cas, la troisième température (T2), et le dispositif d'écriture (S) échauffe les endroits correspondants de la couche (WS) à la troisième température (T2) ou à la deuxième température (T1) en fonction de l'information à enregistrer, le dispositif de préchauffage (V) étant disposé très près du dispositif d'écriture (S) ou en constituant une partie, et l'énergie d'écriture étant régulée en fonction de signaux de capteurs thermiques et/ou optiques (SE, TS), le capteur optique (SE) contrôlant les informations portées par le dispositif d'écriture (S) sur le support d'enregistrement (A).

2. Dispositif selon la revendication 1, **caractérisé** en ce que le dispositif de préchauffage (V) agit sur le côté du support d'enregistrement (A) qui est opposé à la couche (WS).

3. Dispositif selon la revendication 2, **caractérisé** en ce que le dispositif de préchauffage (V) s'étend dans la région du dispositif d'écriture (S).

4. Dispositif selon l'une des revendications 1 à 3, **caractérisé** en ce que le dispositif de préchauffage (V) est réalisé sous la forme d'un rouleau presseur (R5) pour le dispositif d'écriture (S).

5. Dispositif selon l'une des revendications 1 à 4, **caractérisé** en ce que la température du dispositif d'effacement (L) est commandée par les signaux d'un deuxième capteur optique (SL), qui contrôle le support d'enregistrement effacé (A).

6. Dispositif selon l'une des revendications 1 à 5, **caractérisé** en ce que des capteurs de température respectifs (TS1, TS2, TS3, TS4) sont prévus dans le dispositif d'effacement (L) et/ou dans le dispositif de refroidissement (K) et/ou dans le dispositif de préchauffage (V) et/ou dans le dispositif d'écriture (S), et les températures des dispositifs correspondants (L, K, V, S) sont régulées en fonction des signaux de ces capteurs de température (TS1 à TS4).

7. Dispositif selon l'une des revendications, 1 à 6, **caractérisé** en ce qu'un dispositif de commande (P) est prévu, qui reçoit les signaux des capteurs optiques (SE, SL) et/ou des capteurs de température (TS1 à TS4) et qui régule la température du dispositif d'effacement (L), du dispositif de refroidissement (K), du dispositif de préchauffage (V) et/ou du dispositif d'écriture (S).

8. Dispositif selon la revendication 7, **caractérisé** en ce que le dispositif de commande (P) régule la température du dispositif de préchauffage (V) et/ou du dispositif d'écriture (S) en fonction de l'information à porter sur le support d'enregistrement.

9. Dispositif selon la revendication 7 ou 8, **caractérisé** en ce que l'information écrite sur une ligne est logiquement liée à l'information écrite sur la ligne précédente, en ce que les colonnes qui doivent porter pour la première fois une écriture sont déterminées, et en ce que le dispositif de préchauffage (V) et/ou le dispositif d'écriture (S) sont, pour les colonnes ainsi déterminées, échauffées à une température donnée avant l'opération d'écriture proprement dite.

10. Dispositif selon l'une des revendications 7 à 9, **caractérisé** en ce que les valeurs des capteurs de température (TS1 à TS4) et/ou des capteurs optiques (SE, SL) sont comparées aux valeurs qui sont présentes dans une ou plusieurs mémoires du dispositif de commande (P).

11. Dispositif selon la revendication 10, **caractérisé** en ce que les valeurs sont contenues pour partie ou en totalité dans la mémoire d'une carte à puce, un dispositif de lecture (LE) correspondant étant raccordé au dispositif de commande (P).

12. Dispositif selon la revendication 10 ou 11, **caractérisé** en ce qu'il est prévu un dispositif de lecture (LE), en ce que le support d'enregistrement (A) contient des informations qui sont lues par le dispositif de lecture (LE) avant le début de l'opération d'effacement ou d'écriture et transmises au dispositif de commande (P), et en ce que ces informations contiennent des indications sur les températures nécessaires d'effacement et/ou d'écriture.

13. Dispositif selon l'une des revendications précédentes, **caractérisé** en ce que le dispositif d'écriture (S) peut être désenclenché.

14. Dispositif selon l'une des revendications 1 à 3, **caractérisé** en ce que le dispositif d'écriture (S) est réalisé sous la forme d'une source de faisceau laser, le faisceau laser (LS) étant dirigé ligne par ligne au-dessus du support d'enregistrement (A) et enclenché ou désenclenché conformément aux informations à enregistrer, et l'énergie du faisceau laser (LS) ou la durée d'enclenchement étant régulée en fonction des signaux du capteur optique (SE).

15. Dispositif selon l'une des revendications 1 à 13, **caractérisé** en ce que le dispositif d'écriture (S) est réalisé sous la forme de diodes électroluminescentes (LE) dont les rayons lumineux sont focalisés en fonction des besoins par une lentille cauliforme (OP), une diode étant prévu pour chaque point à porter et cette diode étant enclenchée ou désenclenchée conformément aux informations à enregistrer, et l'énergie des diodes ou leur durée d'enclenchement étant régulée en fonction des signaux du capteur optique (SE).

16. Dispositif selon l'une des revendications 1 à 13, **caractérisé** en ce que le dispositif d'écriture (S) est constitué d'une source lumineuse tubulaire (LQ) et d'un obturateur optique (VS) disposé entre cette source et le support d'enregistrement (A), la durée d'ouverture de l'obturateur (VS), lequel commande le faisceau lumineux pour chaque point à porter sur le support, ou l'énergie de la source lumineuse (LQ) étant régulée en fonction des signaux du capteur optique (SE).
